(19)

Europäisches
Patentamt
European
Patent Office
Office européen
des brevets

(11) **EP 4 311 338 A1**

(12) **EUROPEAN PATENT APPLICATION**
published in accordance with Art. 153(4) EPC

(43) Date of publication:
**24.01.2024 Bulletin 2024/04**

(21) Application number: **22778762.9**

(22) Date of filing: **25.03.2022**

(51) International Patent Classification (IPC):
**H04W 72/04** (2023.01)     **H04L 5/00** (2006.01)

(52) Cooperative Patent Classification (CPC):
**H04L 5/00; H04W 28/02; H04W 72/04**

(86) International application number:
**PCT/CN2022/082944**

(87) International publication number:
**WO 2022/206579 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 CN 202110363901**

(71) Applicant: **Huawei Technologies Co., Ltd.
Longgang
Shenzhen, Guangdong 518129 (CN)**

(72) Inventors:
• **LI, Jun
  Shenzhen, Guangdong 518129 (CN)**
• **JIAO, Shurong
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **UPLINK CONTROL INFORMATION TRANSMISSION METHOD AND APPARATUS**

(57)     This application provides an uplink control information transmission method. The method includes: A terminal device determines N pieces of uplink control information, where N is an integer greater than 3, the N pieces of uplink control information include first uplink control information and second uplink control information, and a priority of the second uplink control information is higher than that of the first uplink control information; and the terminal device sends a physical uplink channel carrying the N pieces of uplink control information, where the first uplink control information and the second uplink control information are concatenated and then encoded; or the terminal device discards the first uplink control information, and sends a physical uplink channel carrying the second uplink control information. In this way, the uplink control information is sent within a capability range of the terminal device, and working performance of the terminal device is ensured.

Method 200

Step S201: A terminal device determines N pieces of uplink control information, where N is an integer greater than 3, the N pieces of uplink control information include first uplink control information and second uplink control information, and a priority of the second uplink control information is higher than that of the first uplink control information

Step S202: The terminal device sends, to a network device, a physical channel carrying the N pieces of uplink control information, where the first uplink control information and the second uplink control information are concatenated and then encoded; or the terminal device discards the first uplink control information, and sends a physical uplink channel carrying the second uplink control information

FIG. 2

**Description**

This application claims priority to Chinese Patent Application No. 202110363901.7, filed with the China National Intellectual Property Administration on April 2, 2021 and entitled "UPLINK CONTROL INFORMATION TRANSMISSION METHOD AND APPARATUS", which is incorporated herein by reference in its entirety.

**TECHNICAL FIELD**

This application relates to the communication field, and more specifically, to an uplink control information transmission method and apparatus.

**BACKGROUND**

For an enhanced mobile broadband (enhanced mobile broadband, eMBB) service and an ultra-reliable and low-latency communication (ultra reliable and low latency communication, URLLC) service, uplink control information (uplink control information, UCI) may be classified into high-priority UCI and low-priority UCI. The high-priority UCI corresponds to the URLLC service, and the low-priority UCI corresponds to the eMBB service.

Currently, it is discussed that the high-priority UCI and the low-priority UCI are multiplexed together for simultaneous transmission. Therefore, a physical uplink channel may carry both the high-priority UCI and the low-priority UCI. If the physical uplink channel simultaneously carries the high-priority UCI and the low-priority UCI, processing complexity and costs of a terminal device are increased. This affects working performance of the terminal device. Therefore, how to better transmit uplink control information becomes a technical problem to be currently resolved.

**SUMMARY**

This application provides an uplink control information transmission method and apparatus, to send uplink control information within a capability range of a terminal device, and ensure working performance of the terminal device.

According to a first aspect, an uplink control information transmission method is provided. The method includes: A terminal device determines N pieces of uplink control information, where N is an integer greater than 3, the N pieces of uplink control information include first uplink control information and second uplink control information, and a priority of the second uplink control information is higher than that of the first uplink control information; and the terminal device sends a physical uplink channel carrying the N pieces of uplink control information, where the first uplink control information and the second uplink control information are concatenated and then encoded; or the terminal device discards the first uplink control information, and sends a physical uplink channel carrying the second uplink control information.

In this application, the first uplink control information may include one or more pieces of uplink control information, and the second uplink control information may also include one or more pieces of uplink control information.

In a possible implementation, the terminal device discards the first uplink control information, and sends the physical uplink channel carrying the second uplink control information. It may be understood that the terminal device sends a physical uplink channel carrying high-priority uplink control information.

In a possible implementation, the terminal device discards the first uplink control information, and sends the physical uplink channel carrying the second uplink control information. It may be understood that the terminal device may discard some low-priority uplink control information, and send a physical uplink channel carrying high-priority uplink control information and a physical uplink channel carrying some low-priority uplink control information.

In a possible implementation, the terminal device discards the first uplink control information, and sends the physical uplink channel carrying the second uplink control information. It may be understood that the terminal device may further continue to discard or send third uplink control information. The N pieces of uplink control information further include the third uplink control information.

That is, in this application, the terminal device may send the physical uplink channel carrying the second uplink control information. However, whether the terminal device can further send other uplink control information in the N pieces of uplink control information is not limited in this application. This application does not exclude a case in which the terminal device may discard some of the first uplink control information and send the carried second uplink control information and some other uplink control information.

Based on the foregoing technical solution, the terminal device may determine the N pieces of to-be-sent uplink control information, and N is an integer greater than 3. That is, in this application, a quantity of uplink control information to be sent by the terminal device may be greater than 3. However, in a joint encoding manner or a discarding manner, when the uplink control information is sent, the quantity of sent uplink control information may not exceed a maximum quantity of independently encoded uplink control information. In this way, the uplink control information can be sent within a capability range of the terminal device, and working performance of the terminal device is ensured.

With reference to the first aspect, in some implementations of the first aspect, that the terminal device discards the first uplink control information includes: When N is greater than a first threshold, the terminal device discards the first uplink control information.

With reference to the first aspect, in some implementations of the first aspect, that the first UCI and the second UCI are concatenated and then encoded includes: When N is greater than a first threshold, the terminal device concatenates the first uplink control information and the second uplink control information and then encodes the first uplink control information and the second uplink control information.

In this application, the first threshold may be a quantity or a maximum quantity of independently encoded uplink control information, or a total quantity or a maximum quantity of independently encoded UCI bit sequences, or a total quantity of code blocks for encoding the uplink control information, or a total quantity of code blocks for encoding each independently encoded UCI bit sequence.

Based on the foregoing technical solution, before discarding the uplink control information or jointly encoding the uplink control information, the terminal device may further introduce a determining condition. In this way, the uplink control information can be sent within a capability range of the terminal device, and working performance of the terminal device is ensured.

With reference to the first aspect, in some implementations of the first aspect, the first threshold is indicated by a network device, or the first threshold is determined based on a capability reported by the terminal device, or the first threshold is predefined.

Based on the foregoing technical solution, in this application, the first threshold may be flexibly determined, to ensure that a processing capability of the terminal device is not exceeded, and ensure working performance of the terminal device.

With reference to the first aspect, in some implementations of the first aspect, the capability reported by the terminal device includes at least one of the following: a quantity of independently encoded uplink control information that is supported by the terminal device being greater than 3, or a maximum quantity of independently encoded uplink control information supported by the terminal device, or code blocks of more than six polar codes supported by the terminal device, or an enhanced polar code supported by the terminal device, or a maximum quantity of code blocks of polar codes supported by the terminal device.

Based on the foregoing technical solution, the terminal device may report the capability to the network device, so that the network device can flexibly determine the first threshold based on indication information of the terminal device and a resource usage status on a network side. In this way, the uplink control information can be sent within a capability range of the terminal device, and working performance of the terminal device is ensured.

With reference to the first aspect, in some implementations of the first aspect, the first uplink control information is lowest-priority UCI in the N pieces of UCI.

In this application, the first uplink control information is the lowest-priority UCI in the N pieces of UCI. For example, the first uplink control information may be channel state information part 2 (CSI part 2).

It should be understood that, in this application, a person skilled in the art may flexibly determine the first control information based on an actual situation. This is not limited.

According to a second aspect, an uplink control information transmission method is provided. The method includes: A network device receives a physical uplink channel carrying N pieces of uplink control information, where first uplink control information and second uplink control information are concatenated and then encoded; or a network device receives a physical uplink channel carrying second uplink control information, where a physical uplink control channel does not carry first uplink control information. N is an integer greater than 3, the N pieces of uplink control information include the first uplink control information and the second uplink control information, and a priority of the second uplink control information is higher than that of the first uplink control information.

With reference to the second aspect, in some implementations of the second aspect, that a physical uplink control channel does not carry first uplink control information includes: When N is greater than a first threshold, the physical uplink control channel does not carry the first uplink control information.

In a possible implementation, that a physical uplink control channel does not carry first uplink control information may be that the first uplink control information is discarded, or the network device discards the first uplink control information, or the network device receives a physical uplink channel to obtain uplink control information carried on the physical uplink channel, where the uplink control information does not include the first uplink control information.

With reference to the second aspect, in some implementations of the second aspect, that the first UCI and the second UCI are concatenated and then encoded includes: When N is greater than the first threshold, the first uplink control information and the second uplink control information are concatenated and then encoded.

With reference to the second aspect, in some implementations of the second aspect, the first threshold is indicated by the network device, or the first threshold is determined based on a capability reported by the terminal device, or the first threshold is predefined.

With reference to the second aspect, in some implementations of the second aspect, the capability received by the network device includes at least one of the following: a quantity of independently encoded uplink control information that is supported by the terminal device being greater than 3, or a maximum quantity of independently encoded uplink control information supported by the terminal device, or code blocks of more than six polar codes supported by the terminal device, or an enhanced polar code supported by the terminal device, or a maximum quantity of code blocks of polar codes supported by the terminal device.

With reference to the second aspect, in some implementations of the second aspect, the first uplink control information is lowest-priority UCI in the N pieces of UCI.

According to a third aspect, an uplink control information transmission apparatus is provided. The apparatus is configured to perform the communication method according to any one of the first aspect and the possible implementations of the first aspect.

According to a fourth aspect, an uplink control information transmission apparatus is provided. The apparatus is configured to perform the communication method according to any one of the second aspect and the possible implementations of the second aspect.

According to a fifth aspect, an embodiment of this application provides an uplink control information transmission apparatus, including a transceiver and a processor. The transceiver and the processor are configured to implement the communication method according to any one of the first aspect and the possible implementations of the first aspect.

According to a sixth aspect, an embodiment of this application provides an uplink control information transmission apparatus, including a transceiver and a processor. The transceiver and the processor are configured to implement the communication method according to any one of the second aspect and the possible implementations of the second aspect.

According to a seventh aspect, a processor is provided, including an input circuit, an output circuit, and a processing circuit. The processing circuit is configured to receive a signal through the input circuit, and send a signal through the output circuit, to enable an apparatus including the processor to perform the method according to any one of the first aspect and the second aspect and the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, receive a signal by using a receiver, and transmit a signal by using a transmitter, to perform the method according to any one of the first aspect and the second aspect and the possible implementations of the first aspect and the second aspect.

There are one or more processors, and there are one or more memories.

The memory may be integrated with the processor, or the memory and the processor are separately disposed.

In a specific implementation process, the memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips, or may be a chip system. The processor in the processing apparatus may be implemented by hardware, or may be implemented by software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a chip is provided. The chip includes a processor and a communication interface. The communication interface is configured to communicate with an external component or an internal component, and the processor is configured to perform the method according to any one of the first aspect and the second aspect and the possible implementations of the first aspect and the second aspect.

Optionally, the chip may further include a memory. The memory stores instructions. The processor is configured to execute the instructions stored in the memory or other instructions. When the instructions are executed, the processor is configured to perform the method according to any one of the first aspect to the fourth aspect and the possible implementations of the first aspect and the second aspect.

According to a tenth aspect, a computer program product is provided. The computer program product includes a computer program (which may also be referred to as code or instructions). When the computer program is run, the method according to any one of the first aspect to the fourth aspect and the possible implementations of the first aspect and the second aspect is performed.

According to an eleventh aspect, a computer-readable storage medium is provided. The computer-readable storage medium stores a computer program (which may also be referred to as code or instructions). When the computer program is run on a computer, the computer is enabled to perform the method according to any one of the first aspect and the second aspect and the possible implementations of the first aspect and the second aspect.

According to a twelfth aspect, a communication system is provided, including any apparatus that has functions of implementing the method according to the first aspect and the second aspect and the possible designs.

According to the technical solutions provided in this application, uplink control information is sent within a capability range of the terminal device, and working performance of the terminal device is ensured.

## BRIEF DESCRIPTION OF DRAWINGS

FIG. 1 is a scenario to which this application is applicable;

FIG. 2 is a schematic block diagram of an uplink control information transmission method according to an embodiment of this application;

FIG. 3 is a schematic block diagram of an uplink control information transmission method according to an embodiment of this application;

FIG. 4 is a schematic block diagram of an uplink control information transmission method according to an embodiment of this application;

FIG. 5 is a schematic block diagram of an uplink control information transmission method according to an embodiment of this application;

FIG. 6 is a schematic diagram of an uplink control information transmission method according to an embodiment of this application;

FIG. 7 is a schematic diagram of an uplink control information transmission method according to an embodiment of this application;

FIG. 8 is a schematic block diagram of an uplink control information transmission apparatus according to an embodiment of this application; and

FIG. 9 is a schematic block diagram of an uplink control information transmission apparatus according to an embodiment of this application.

## DESCRIPTION OF EMBODIMENTS

The following describes technical solutions of this application with reference to accompanying drawings.

A radio access network device is an access device that is used by a terminal device to access a mobile communication system in a wireless manner. The radio access network device may be a base station NodeB, an evolved NodeB eNodeB, a gNodeB in a 5G mobile communication system, a NodeB in a future mobile communication system, an access node in a Wi-Fi system, or the like. This embodiment of this application imposes no limitation on a specific technology used by the radio access network device and a specific device form of the radio access network device.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (pad), a computer with a wireless receiving and sending function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including indoors or outdoors, handheld, or vehicle-mounted; or may be deployed on water; or may be deployed on an airplane, a balloon, or a satellite in the air. Application scenarios of the radio access network device and the terminal device are not limited in this embodiment of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6G, a spectrum above 6G, or both of a spectrum below 6G and a spectrum above 6G may be used for communication between the radio access network device and the terminal device, and between terminal devices. Spectrum resources used by the radio access network device and the terminal device are not limited in this embodiment of this application.

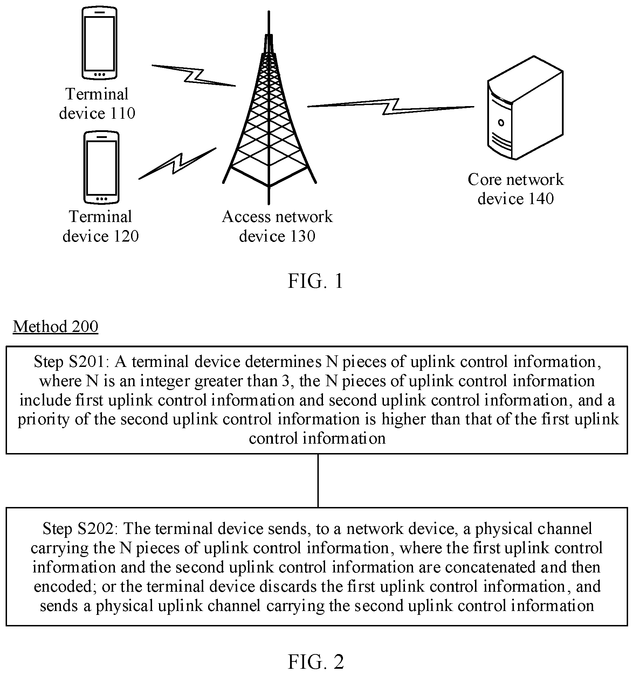

FIG. 1 is a diagram of a system architecture to which an embodiment of this application is applicable. As shown in the figure, the mobile communication system includes a core network device 140, a radio access network device 130, and at least one terminal device (for example, a terminal device 120 and a terminal device 110 in FIG. 1). The terminal device is connected to the radio access network device in a wireless manner, and the radio access network device is connected to the core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

For ease of understanding, uplink control information (uplink control information, UCI) and multiplexing are first briefly described in this application.

The uplink control information includes a scheduling request (scheduling request, SR), a hybrid automatic repeat request acknowledgment (hybrid automatic repeat request acknowledgment, HARQ-ACK), channel state information (channel state information, CSI), and the like. The CSI may further specifically include a precoding matrix indication (precoding matrix indication, PMI), a rank indicator (rank indicator, RI), a layer indicator (layer indicator, LI), channel quality information (channel quality indicator, CQI), a channel state information reference signal (reference signal, RS) resource indicator (CSI-RS resource indicator, CRI), reference signal received power (reference signal received power, RSRP), a signal to interference plus noise ratio (signal to interference plus noise ratio, SINR), and the like. In the CSI, some CSI may be concatenated, and is referred to as CSI part 1 (CSI part 1) or CSI part 2 (CSI part 2). The CSI part 1 may include a CRI, an RI, wideband CSI of a first transport block (first transport block), a subband differential CQI of the first TB, and the like. The CSI part 2 (CSI part 2) may include a wideband CQI, an LI, and the like of a second transport block (transport block, TB). CSI specifically included in the CSI part 1 and the CSI part 2 is not limited in this application. A UCI bit sequence may be represented as $a_0$, $a_1$, $a_2$, ..., and $a_{o_{UCI}}$, and $O^{UCI}$ is a length of the UCI bit sequence. For example, a bit sequence of the HARQ-ACK may be represented as $a_0$, $a_1$, $a_2$, ..., and $a_{o_{ACK}-1}$, a bit sequence of the SR may be represented as $b_0$, $b_1$, $b_2$, ..., and $b_{o_{SR}-1}$, a bit sequence of the CSI part 1 may be represented as $c_0$, $c_1$, $c_2$, ..., and $c_{O_{CSIpart1}-1}$, and a bit sequence of the CSI part 2 may be represented as $d_0$, $d_1$, $d_2$, ..., and $d_{O_{CSIpart2}-1}$.

The foregoing UCI bit sequence may be further concatenated to form a total UCI bit sequence $a_0$, $a_1$, $a_2$, ..., and $a_{A-1}$, and then is encoded. That is, encoding is processing the total UCI bit sequence. For example, the total UCI bit sequence $a_0$, $a_1$, $a_2$, ..., and $a_{A-1}$ includes the HARQ-ACK and the SR (which may also be understood as that the HARQ-ACK and the SR are concatenated together), that is, $a_0$, $a_1$, $a_2$, ..., and $a_{o_{ACK}-1}$, and $b_0$, $b_1$, $b_2$, ..., and $b_{o_{SR}-1}$. $O^{ACK}$ is a quantity of bits of the HARQ-ACK, $O^{SR}$ is the bit sequence of the SR, $A=O^{ACK}+O^{SR}$, and $A$ is a total quantity of bits, or may be understood as a payload size (payload size). The total UCI bit sequence $a_0$, $a_1$, $a_2$, ..., and $a_{A-1}$ may further include the HARQ-ACK, the SR, and the CSI part 1, or include the HARQ-ACK and the CSI part 1, or include only the HARQ-ACK, or include only the CSI part 1, or include only the CSI part 2, or include only the SR. It should be understood that UCI 1 and UCI 2 are concatenated, that is, a UCI 1 bit sequence and a UCI 2 bit sequence are connected, for example, the HARQ-ACK and the SR described above. It should be understood that a quantity of the total UCI bit sequence may be 1, 2, 3, or another value.

When a length of the total UCI bit sequence, that is, $A$, is greater than or equal to 12, polar code encoding (polar coding) is used for the total UCI bit sequence; otherwise, channel encoding of a small block length (channel coding of small block lengths) is used for the total UCI bit sequence. When polar code encoding is used, code block (CB, codeblock) segmentation (code block segmentation) needs to be performed on the total UCI bit sequence, and then a cyclic redundancy check (cyclic redundancy check, CRC) is added to each CB. The total UCI bit sequence may be split into a maximum of two code blocks (codeblock, CB), and a cyclic redundancy check (cyclic redundancy check, CRC) is independently added to each CB, and then channel encoding (that is, polar coding) is performed. A length A of the total UCI bit sequence is less than or equal to 1706.

Generally, when the UCI is carried on a physical uplink control channel (physical uplink control channel, PUCCH), the HARQ-ACK, the SR, and the CSI part 1 are concatenated to form the total UCI bit sequence $a_0$, $a_1$, $a_2$, ..., and $a_{A-1}$, and then are encoded. That is, the HARQ-ACK, the SR, and the CSI part 1 are concatenated and then encoded. The CSI part 2 independently forms another total UCI bit sequence $a_0$, $a_1$, $a_2$, ..., and $a_{A-1}$, and then is encoded. That is, the CSI part 2 is independently encoded. When the UCI is carried on a physical uplink shared channel (physical uplink shared channel, PUSCH), the HARQ-ACK is independently encoded, the CSI part 1 is independently encoded, and the CSI part 2 is also independently encoded.

A priority of the UCI may be related to factors such as information included in the UCI, a physical uplink channel carrying the UCI, a cell, and a period. Specifically, the CSI is used as an example for description. A priority value (priority value) may be defined for each CSI reporting (CSI report). $\text{Pr}_{iCSI}(y,k,c,s)=2 \cdot N_{cells} \cdot M_S \cdot y + N_{cells} \cdot M_S \cdot k + M_S \cdot c + s$. A smaller value indicates a higher priority. When the PUSCH carries aperiodic (aperiodic) CSI reporting, $y = 0$. When the PUSCH carries semi-persistent (semi-persistent) CSI reporting, $y=1$. When the PUCCH carries semi-persistent (semi-persistent) CSI reporting, $y = 2$. When the PUCCH carries periodic (periodic) CSI reporting, $y = 3$. If the CSI includes the RSRP or the SINR, $k = 0$ ; otherwise, $k=1$. $c$ is a serving cell index, $N_{cells}$ is a quantity of cells, s is a reporting configuration index, and $M_S$ is a maximum quantity of CSI reporting configurations.

Alternatively, a priority of the UCI may be configured by using higher layer signaling, or indicated by downlink control information (downlink control information, DCI). For example, when the DCI schedules the HARQ-ACK, a priority of the HARQ-ACK may be indicated. If there are only two priorities, it indicates whether the HARQ-ACK has a high priority or a low priority.

The priority of the UCI may also be related to a service. For example, UCI of the mMTC has a lower priority than UCI of the eMBB. In addition, priorities of UCI between different PUCCH groups may also be defined. For example, a priority of UCI in a PUCCH group 0 is higher than that of UCI in a PUCCH group 1. Alternatively, priorities of UCI between different base stations, UCI between different UEs, or UCI between different transmission reception points (transmission reception point, TRP) may be defined.

When high-priority UCI and low-priority UCI are multiplexed, the high-priority (high priority, HP) UCI and the low-priority (low priority, LP) UCI are carried on the PUCCH or the PUSCH. For example, the PUCCH carries an HP HARQ-ACK, an LP HARQ-ACK, and an HP SR. The PUSCH carries a high-priority HARQ-ACK, a low-priority HARQ-ACK, and HP or LP CSI.

Currently, to support multiplexing of the high-priority UCI and the low-priority UCI for transmission, when the high-priority UCI and the low-priority UCI are independently encoded, encoding complexity and costs of user equipment (user equipment, UE) are increased. Therefore, how to better multiplex UCI becomes a technical problem to be currently resolved.

FIG. 2 is a schematic diagram of an uplink control information transmission method according to an embodiment of this application. The method in FIG. 2 includes the following steps.

Step S201: A terminal device determines N pieces of uplink control information, where N is an integer greater than 3, the N pieces of uplink control information include first uplink control information and second uplink control information, and a priority of the second uplink control information is higher than that of the first uplink control information.

In this application, the N pieces of uplink control information may be understood as a quantity of uplink control information to be transmitted by the terminal device, or a quantity of total bit sequences of the independently encoded UCI. Each of the N pieces of UCI may be a HARQ-ACK, a CSI part 1, a CSI part 2, or an SR. Each piece of UCI may further correspond to a priority, and each piece of UCI may independently form a total UCI bit sequence, and then be encoded. That is, each of the N pieces of UCI may be independently encoded. For example, N=4, and the four pieces of UCI may specifically include a high-priority HARQ-ACK, a low-priority HARQ-ACK, a low-priority CSI part 1, and a low-priority CSI part 2. Alternatively, the four pieces of UCI may include a high-priority HARQ-ACK, a low-priority HARQ-ACK, a high-priority CSI part 1, and a high-priority CSI part 2. Alternatively, the four pieces of UCI may include a high-priority HARQ-ACK, a low-priority HARQ-ACK, a high-priority CSI part 1, and a low-priority CSI part 2. Alternatively, the total UCI bit sequence may be further formed by a plurality of pieces of UCI.

In this application, the first uplink control information may be lowest-priority UCI in the N pieces of UCI. For example, the first uplink control information may be a CSI part 2. For another example, the first uplink control information may be a low-priority CSI part 2 or a low-priority CSI part 1. It should be noted that a person skilled in the art may flexibly determine content of the first control information based on an actual situation. In this application, the first uplink control information may include one or more pieces of uplink control information.

For example, the second uplink control information may be a HARQ-ACK. For another example, the second uplink control information may be a CSI part 1. It should be noted that a person skilled in the art may flexibly determine content of the second control information based on an actual situation.

When N exceeds a first threshold, the terminal device discards some uplink control information or concatenates the uplink control information and then encodes the uplink control information.

The first threshold in this application may also be understood as a quantity or a maximum quantity of independently encoded uplink control information that is supported, or a quantity or a maximum quantity of total UCI bit sequences (an example of the first threshold). That is, in this application, the first threshold may be a quantity or a maximum quantity of independently encoded uplink control information, or a total quantity or a maximum quantity of independently encoded UCI bit sequences, or a total quantity of code blocks for encoding the uplink control information, or a total quantity of code blocks for encoding each independently encoded UCI bit sequence.

In this application, the first threshold may be indicated by the network device, or may be determined based on a capability reported by the terminal device, or may be predefined.

In this application, it is assumed that a maximum quantity of independently encoded uplink control information supported by the terminal device is Y That is, the first threshold is equal to Y, and Y is a positive integer. For example, a low-priority HARQ-ACK is (X1=1) uplink control information and needs to be independently encoded; a high-priority HARQ-ACK is (X2=1) uplink control information and needs to be independently encoded; a CSI part 1 is (X3=1) uplink control information and needs to be independently encoded; and a CSI part 2 is (X4=1) uplink control information and needs to be independently encoded.

In this application, the terminal device may determine the N pieces of to-be-sent uplink control information, and N is an integer greater than 3. That is, in this application, a quantity of uplink control information to be sent by the terminal device may be greater than 3. However, in a joint encoding manner or a discarding manner, when the uplink control information is sent, the quantity of sent uplink control information may not exceed the maximum quantity of independently encoded uplink control information. That is, X1+X2+X3+X4<=Y In this way, the uplink control information can be sent within a capability range of the terminal device, and working performance of the terminal device is ensured.

In an example, it is assumed that the maximum quantity of independently encoded uplink control information supported by the terminal device is 4, that is, the first threshold is equal to 4. The terminal device may determine that the uplink control information is the HARQ-ACK and the CSI part 1. For example, an independently encoded high-priority HARQ-ACK, an independently encoded low-priority HARQ-ACK, an independently encoded high-priority CSI part 1, and an independently encoded low-priority CSI part 1 are included. That is, in this application, in the uplink control information determined by the terminal device, a quantity of total bit sequences of the independently encoded UCI does not exceed the first threshold Y

In an example, the terminal device may first report the capability to the network device, for example, a quantity of independently encoded uplink control information supported by the terminal device being greater than 4, or a maximum quantity of independently encoded uplink control information supported by the terminal device. The network device may indicate the first threshold based on the capability reported by the terminal device and/or a resource status on a network side. In this case, the terminal device may determine the uplink control information based on a configuration or scheduling information of the network device, to ensure the maximum quantity of independently encoded uplink control information.

The first threshold in this application may also be understood as a quantity of code blocks of the UCI that is supported, or a maximum quantity of code blocks of the UCI that is supported (another example of the first threshold).

For example, it is assumed that a maximum quantity of code blocks supported by the terminal device is Y, that is, the first threshold is equal to Y, a low-priority HARQ-ACK occupies X1 code blocks, a high-priority HARQ-ACK occupies X2 code blocks, a CSI part 1 occupies X3 code blocks, and a CSI part 2 occupies X4 code blocks. When determining the uplink control information, the terminal device ensures that the quantity of code blocks of the uplink control information does not exceed Y, that is, X1+X2+X3+X4<=Y.

In an example, it is assumed that a maximum quantity of code blocks supported by the terminal device is 5. The terminal device may determine that the uplink control information is the HARQ-ACK and the CSI part 1. For example, a high-priority HARQ-ACK is independently encoded and includes two code blocks, a low-priority HARQ-ACK is independently encoded and includes two code blocks, and a CSI part 1 is independently encoded and includes one code block. That is, in this application, the quantity of code blocks of the uplink control information determined by the terminal device does not exceed the maximum quantity of code blocks, that is, the first threshold.

In an example, the terminal device may first report the capability to the network device, for example, code blocks of more than six polar codes supported by the terminal device, or an enhanced polar code supported by the terminal device, or a maximum quantity of code blocks of polar codes supported by the terminal device. The network device may indicate the first threshold, that is, the maximum quantity of code blocks of the uplink control information, to the terminal device based on the capability reported by the terminal device and/or the resource status on the network side. In this case, the terminal device may determine the uplink control information based on the configuration or the scheduling information of the network device, to ensure that the quantity of code blocks of the sent uplink control information does not exceed the maximum quantity of code blocks indicated by the network device.

In an example, it is assumed that a maximum quantity of code blocks may be preset to 6 in a protocol, and the terminal device may determine the uplink control information. The terminal device may determine that the uplink control information is the HARQ-ACK and the CSI part 1. For example, a high-priority HARQ-ACK includes two code blocks, a low-priority HARQ-ACK includes two code blocks, and a CSI part 1 includes two code blocks.

In this application, the terminal device determining the N pieces of uplink control information is determining the N pieces of uplink control information in one slot (slot) or a sub-slot (sub-slot).

In this application, the N pieces of uplink control information overlap in time domain before multiplexing. For example, a PUCCH 1 carries a high-priority HARQ-ACK, a PUCCH 2 carries a low-priority HARQ-ACK, and a PUSCH carries a low-priority CSI part 1 and a low-priority CSI part 2. The PUCCH 1, the PUCCH 2, and the PUSCH overlap in time domain and need to be multiplexed on the PUSCH for sending. If the PUSCH carries a high-priority CSI part 1 and a high-priority CSI part 2, this is also similar.

Step S202: The terminal device sends, to the network device, a physical uplink channel carrying the N pieces of uplink control information, where the first uplink control information and the second uplink control information are concatenated and then encoded; or the terminal device discards the first uplink control information, and sends a physical uplink channel carrying the second uplink control information.

In this application, the terminal device may send, on one physical uplink channel, uplink control information including different priorities.

In a possible implementation, the terminal device may send, to the network device, the physical uplink channel carrying the N pieces of uplink control information. The first uplink control information and the second uplink control information are concatenated and then encoded. It is assumed that the terminal device can support sending of a maximum of three pieces of uplink control information, and the terminal device determines that there may be four pieces of to-be-sent uplink control information: an independently encoded high-priority HARQ-ACK, an independently encoded low-priority HARQ-ACK, an independently encoded high-priority CSI part 1, and an independently encoded low-priority CSI part 1. In this case, the terminal device may concatenate the high-priority CSI part 1 and the low-priority CSI part 1, and then perform encoding. It is assumed that the terminal device can support sending of a maximum of six code blocks of the uplink control information, and the terminal device determines that there may be eight code blocks of the to-be-sent uplink control information: An independently encoded high-priority HARQ-ACK includes two code blocks, an independently encoded low-priority HARQ-ACK includes two code blocks, an independently encoded high-priority CSI part 1 includes two code blocks, and an independently encoded low-priority CSI part 1 includes two code blocks. In this case, the terminal device may concatenate the high-priority CSI part 1 and the low-priority CSI part 1, and then perform encoding. Because a maximum of two code blocks are encoded after concatenation, it can be ensured that the quantity of code blocks does not exceed the capability of the UE.

In a possible implementation, the terminal device may discard the first uplink control information, and sends the physical uplink channel carrying the second uplink control information. For example, it is assumed that the terminal device can support sending of a maximum of three pieces of uplink control information, and the terminal device determines that there may be four pieces of to-be-sent uplink control information: an independently encoded high-priority HARQ-ACK, an independently encoded low-priority HARQ-ACK, an independently encoded high-priority CSI part 1, and an independently encoded low-priority CSI part 1. In this case, the terminal device may discard the low-priority CSI part 1. It is assumed that the terminal device can support sending of a maximum of six code blocks of the uplink control information, and the terminal device determines that there may be eight pieces of to-be-sent uplink control information: An independently encoded high-priority HARQ-ACK includes two code blocks, an independently encoded low-priority HARQ-ACK includes two code blocks, an independently encoded high-priority CSI part 1 includes two code blocks, and an independently encoded low-priority CSI part 1 includes two code blocks. In this case, the terminal device may discard the code blocks of the low-priority CSI part 1.

In a possible implementation, the physical uplink channel may further carry third UCI, and a priority of the third UCI is lower than that of the second UCI. The third UCI is also one of the N pieces of UCI.

In this application, the terminal device discards the first uplink control information, and sends the physical uplink channel carrying the second uplink control information. It may be understood that the terminal device sends a physical uplink channel carrying high-priority uplink control information.

In this application, the terminal device discards the first uplink control information, and sends the physical uplink channel carrying the second uplink control information. It may be understood that the terminal device may discard some low-priority uplink control information, and send a physical uplink channel carrying high-priority uplink control information and a physical uplink channel carrying some low-priority uplink control information.

In this application, the terminal device discards the first uplink control information, and sends the physical uplink channel carrying the second uplink control information. It may be understood that the terminal device may further continue to discard or send the third uplink control information. The N pieces of uplink control information further include the third uplink control information.

That is, in this application, the terminal device may send the physical uplink channel carrying the second uplink control information. However, whether the terminal device can further send other first uplink control information is not limited in this application. This application does not exclude a case in which the terminal device may discard some of the first uplink control information and send the carried second uplink control information and some other first uplink control information.

It should be understood that, in this application, the physical uplink channel may be a physical uplink control channel PUCCH or a physical uplink shared channel PUSCH.

According to the method provided in this application, the uplink control information can be sent within a capability range of the terminal device, and working performance of the terminal device is ensured.

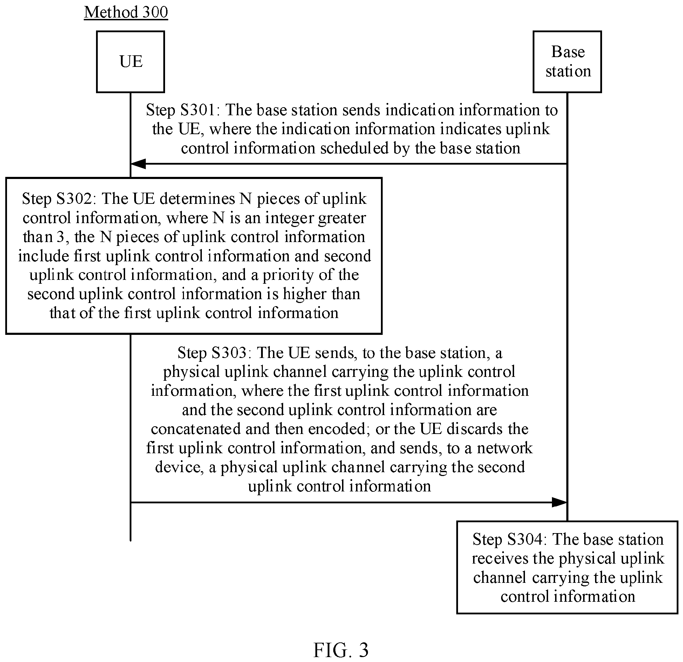

FIG. 3 is a schematic diagram of an uplink control information transmission method according to an embodiment of this application. The method in FIG. 3 includes the following steps.

Step S301: A base station sends indication information to UE, where the indication information indicates uplink control information scheduled by the base station.

In this application, the indication information may be downlink control information (downlink control information, DCI), or may be higher layer configuration information. It should be understood that indication information corresponding to different pieces of UCI may be different. For example, the base station sends DCI to the UE, and the DCI schedules sending of a HARQ-ACK. The base station sends configuration information to the UE to schedule sending of periodic CSI.

In this application, the indication information may include one or more pieces of DCI, or one or more pieces of higher layer configuration information, and a quantity of scheduled uplink control information is N.

In a possible implementation, a quantity of uplink control information indicated by the base station may exceed a processing capability of the UE. It should be understood that the quantity of uplink control information indicated by the base station may exceed the processing capability of the UE means that, in the uplink control information scheduled by the base station, a quantity of total bit sequences of UCI that needs to be independently encoded exceeds the processing capability of the UE.

In a possible implementation, a quantity of code blocks of the uplink control information indicated by the base station may exceed a processing capability of the UE. It should be understood that, that the quantity of code blocks of the uplink control information indicated by the base station may exceed the processing capability of the UE means that, in the uplink control information scheduled by the base station, a total quantity of code blocks of the total bit sequence of the UCI that needs to be independently encoded exceeds the processing capability of the UE.

Step S302: The UE determines N pieces of uplink control information based on the indication information, where N is an integer greater than 3, the N pieces of uplink control information include first uplink control information and second uplink control information, and a priority of the second uplink control information is higher than that of the first uplink control information.

In an example, it is assumed that a maximum quantity of independently encoded uplink control information of the UE is 3. When the indication information indicates that a maximum quantity of independently encoded uplink control information is 4, the UE may determine the uplink control information through concatenation and encoding or through discarding, to ensure that the maximum quantity of independently encoded uplink control information does not exceed 3.

In an example, it is assumed that a maximum quantity of independently encoded uplink control information of the UE is 5. When the indication information indicates that a maximum quantity of independently encoded uplink control information is 4, the UE may determine the uplink control information based on the indication information, to ensure that the maximum quantity of independently encoded uplink control information does not exceed 4.

In an example, it is assumed that the processing capability of the UE is 5. When the indication information indicates that the quantity of code blocks of the uplink control information is 8, the UE may perform concatenation and encoding or discarding, to ensure that the quantity of code blocks of the uplink control information does not exceed 5.

In an example, it is assumed that the processing capability of the UE is 10. When the indication information indicates that the quantity of code blocks of the uplink control information is 8, the UE may determine the uplink control information based on the indication information, and the quantity of code blocks of the uplink control information does not exceed 8.

Step S303: The UE sends, to the base station, a physical uplink channel carrying the N pieces of uplink control information, where the first uplink control information and the second uplink control information are concatenated and then encoded; or the UE discards the first uplink control information, and sends, to the network device, a physical uplink channel carrying the second uplink control information.

For details, refer to step S202 in the method 200. Details are not described again.

That is, in this application, the UE may send, on one physical uplink channel, uplink control information including different priorities, and the uplink control information does not exceed the processing capability of the UE.

Step S304: The base station receives the physical uplink channel carrying the uplink control information.

In a possible implementation, the base station receives the physical uplink channel carrying the uplink control information, and further needs to perform decoding processing on the physical uplink channel.

In a possible implementation, the base station may receive the physical uplink channel carrying the N pieces of uplink control information. The first uplink control information and the second uplink control information are concatenated and then encoded.

In a possible implementation, the base station may receive the physical uplink channel carrying the second uplink control information. The physical uplink control channel does not include the first uplink control information. It may also be understood that the first uplink control information is discarded.

In this application, N is an integer greater than 3, the N pieces of uplink control information may include the first uplink control information and the second uplink control information, and a priority of the second uplink control information is higher than that of the first uplink control information.

According to the method in this embodiment of this application, the uplink control information is sent within a capability range of the terminal device, and working performance of the terminal device is ensured.

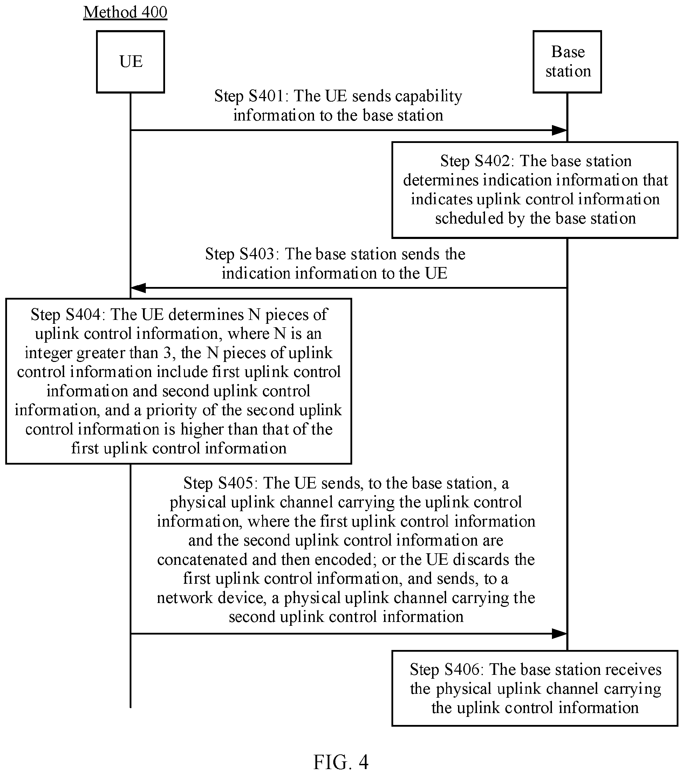

FIG. 4 is a schematic diagram of an uplink control information transmission method according to an embodiment of this application. The method in FIG. 4 includes the following steps.

Step S401: UE sends capability information to a base station.

In a possible implementation, the capability information reported by the UE may include: a quantity of independently encoded uplink control information that is supported and that can be reported by the UE being greater than 3, or a maximum quantity of independently encoded uplink control information supported by the UE.

In a possible implementation, the capability information reported by the UE may include: The UE may report whether a quantity of blocks of the uplink control information greater than or equal to 6 is supported, or the UE may report a maximum quantity of blocks of the uplink control information that is supported, or the UE may report whether the UE has an enhanced polar encoding (polar encode) capability, or the like.

Step S402: The base station determines indication information, where the indication information indicates uplink control information scheduled by the base station.

In a possible implementation, the base station may determine the indication information based on a capability reported by the UE and/or a current network resource usage status.

In an example, when the UE reports that the maximum quantity of independently encoded uplink control information greater than or equal to 3 is supported, for example, the base station may indicate, based on the current network resource usage status, that the maximum quantity of independently encoded uplink control information is 4.

In an example, when the UE reports that the maximum quantity of independently encoded uplink control information that is supported is 5, for example, the base station may indicate, based on the current network resource usage status, that the maximum quantity of independently encoded uplink control information is 5 or 3.

In an example, when the UE reports that the quantity of code blocks of the uplink control information greater than or equal to 6 is supported, for example, the base station may indicate, based on the current network resource usage status, that the maximum quantity of code blocks of the uplink control information is 8.

In an example, when the UE reports that the maximum quantity of code blocks of the uplink control information that is supported is 5 or 7, for example, the base station may indicate, based on the current network resource usage status, that the maximum quantity of code blocks of the uplink control information is 5.

In an example, when the UE reports that the enhanced polar encoding capability is supported, for example, the base station may indicate, based on the current network resource usage status, that the maximum quantity of code blocks of the uplink control information is 10.

Step S403: The base station sends the indication information to the UE.

Step S404: The UE determines N pieces of uplink control information based on the indication information, where N is an integer greater than 3, the N pieces of uplink control information include first uplink control information and second uplink control information, and a priority of the second uplink control information is higher than that of the first uplink control information.

For details, refer to step S302 in the method 300. Details are not described again.

Step S405: The UE sends, to the base station, a physical uplink channel carrying the N pieces of uplink control information, where the first uplink control information and the second uplink control information are concatenated and then encoded; or the UE discards the first uplink control information, and sends a physical uplink channel carrying the second uplink control information.

For details, refer to step S303 in the method 300. Details are not described again.

That is, in this application, the UE may send, on one physical uplink channel, uplink control information including different priorities, and the uplink control information does not exceed the processing capability of the UE.

Step S406: The base station receives the physical uplink channel carrying the uplink control information, and performs decoding.

For details, refer to step S304 in the method 300. Details are not described again.

According to the method in this embodiment of this application, the uplink control information is sent within a capability range of the terminal device, and working performance of the terminal device is ensured.

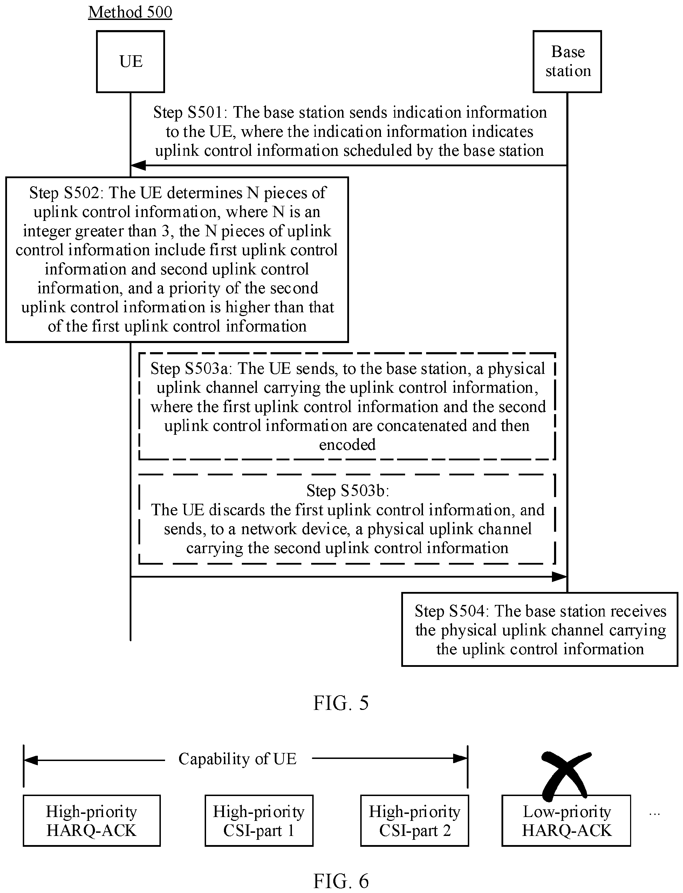

FIG. 5 is a schematic diagram of an uplink control information transmission method according to an embodiment of this application. The method in FIG. 5 includes the following steps.

Step S501: A base station sends indication information to UE, where the indication information indicates uplink control information scheduled by the base station.

For details, refer to step S301 in the method 300. Details are not described herein again.

Step S502: The UE determines N pieces of uplink control information based on the indication information, where N is an integer greater than 3, the N pieces of uplink control information include first uplink control information and second uplink control information, and a priority of the second uplink control information is higher than that of the first uplink control information.

In this embodiment, for details about determining the N pieces of uplink control information by the UE, refer to step S302 in the method 300. Details are not described again.

In some embodiments, step S503a may be performed. The UE sends, to the base station, a physical uplink channel carrying the N pieces of uplink control information. The first uplink control information and the second uplink control information are concatenated and then encoded.

In an example, a CSI part 1 (an example of the second control information) and a CSI part 2 (an example of the first control information) may be concatenated and then encoded.

In an example, a HARQ-ACK (an example of the second control information) and a CSI part 1 (an example of the first control information) may be concatenated and then encoded.

In an example, a HARQ-ACK (an example of the second control information) and a CSI part 2 (an example of the first control information) may be concatenated and then encoded.

In an example, UCI of different priorities may be concatenated and encoded.

For example, if a CSI part 1 has a higher priority than a CSI part 2, the high-priority CSI part 1 (an example of the second control information) and the low-priority CSI part 2 (an example of the first control information) may be concatenated and then encoded. Alternatively, if a CSI part 1 has a lower priority than a CSI part 2, the high-priority CSI part 2 (an example of the second control information) and the low-priority CSI part 1 (an example of the first control information) may be concatenated and then encoded. It should be understood that the priority is obtained by comparing the first UCI and the second UCI, and does not affect priorities of other pieces of UCI, or priority comparison between other pieces of UCI and the first UCI and the second UCI.

For example, the HARQ-ACK and the CSI part 1 have different priorities, or the HARQ-ACK and the CSI part 2 have different priorities, and may be concatenated and then encoded. This is similar to that of the CSI part 1 and the CSI part 2. Details are not described again.

It should be understood that the N pieces of UCI may be further sorted based on priorities. For example, a priority of UCI 1 is lower than that of UCI 2, a priority of UCI 2 is lower than that of UCI 3, and so on. A priority of UCI (N-1) is lower than that of UCI N. In this case, the UCI 1 and the UCI 2 may be concatenated and encoded.

It should be understood that, UCI of a same type may also be concatenated and encoded, but the UCI has different priorities. For example, the UCI type is the HARQ-ACK, but a high-priority HARQ-ACK and a low-priority HARQ-ACK are concatenated and encoded. Alternatively, the UCI type is the CSI, but high-priority CSI (for example, the CSI part 2) and low-priority CSI (for example, the CSI part 1) are jointly encoded.

It should be noted that the first uplink control information and the second control information in this embodiment are merely examples, and are not limited. A person skilled in the art may determine content of the first uplink control information and the second uplink control information based on an actual situation.

In this application, whether to perform concatenation and encoding on other UCI in the N pieces of UCI other than the first uplink control information and the second UCI is also not limited in this application.

For example, third UCI, the first UCI, and the second UCI may be jointly encoded, or third UCI and fourth UCI may be jointly encoded, or third UCI may be independently encoded, and fourth UCI may be independently encoded.

In some embodiments, step S503b may be performed: The UE discards the first uplink control information, and sends the physical uplink channel carrying the second uplink control information.

In an example, the UE may discard the CSI part 2 (an example of the first uplink control information), and send the physical uplink channel carrying the second uplink control information. For example, the UE may discard a code block of the CSI part 2. For example, it is assumed that the terminal device determines that there may be four pieces of to-be-sent uplink control information: an independently encoded high-priority HARQ-ACK, an independently encoded low-priority HARQ-ACK, an independently encoded CSI part 1, and an independently encoded CSI part 2. In this case, the terminal device may discard the CSI part 2 (because the CSI part 2 has a lowest priority). It is assumed that the terminal device determines that there may be eight pieces of to-be-sent uplink control information: An independently encoded high-priority HARQ-ACK includes two code blocks, an independently encoded low-priority HARQ-ACK includes two code blocks, an independently encoded CSI part 1 includes two code blocks, and an independently encoded CSI part 2 includes two code blocks. In this case, the terminal device may discard the code blocks of the CSI part 2.

It should be noted that, the first uplink control information in this embodiment uses the CSI part 2 as an example. This is not limited. A person skilled in the art may pre-specify, based on an actual situation, content of the first uplink control information discarded by the UE. For example, the first uplink control information may be a low-priority CSI part 1 and a low-priority CSI part 2. The first uplink control information may alternatively be discarded according to a priority sequence.

It should be noted that step S503a and step S503b in this application are two parallel implementations. In an actual operation process, step S503a and step S503b do not need to be simultaneously performed.

Step S504: The base station receives the physical uplink channel carrying the uplink control information.

For details, refer to step S304 in method 300. Details are not described again.

According to the method in this embodiment of this application, the uplink control information is sent within a capability range of the terminal device, and working performance of the terminal device is ensured.

The method 600 is an embodiment of an uplink control information transmission method provided in this application, and the method 600 includes the following steps.

Step S601: A base station sends indication information to UE, where the indication information indicates uplink control information scheduled by the base station.

For details, refer to step S301 in the method 300. Details are not described herein again.

Step S602: The UE determines N pieces of uplink control information based on the indication information, where N is an integer greater than 3, the N pieces of uplink control information include first uplink control information and second uplink control information, and a priority of the second uplink control information is higher than that of the first uplink control information.

In this embodiment, for details about determining the N pieces of uplink control information by the UE, refer to step S302 in the method 300. Details are not described again.

In some embodiments, step S603a may be performed. The UE sends, to the base station, a physical uplink channel carrying the N pieces of uplink control information. The first uplink control information and the second uplink control information are concatenated and then encoded.

In a possible implementation, when N is greater than a first threshold, the first UCI and the second UCI may be concatenated and then encoded.

For example, when a quantity N of to-be-transmitted uplink control information exceeds a maximum quantity (that is, the first threshold) of independently encoded uplink control information, joint encoding may be performed. It is assumed that the maximum quantity of independently encoded uplink control information of the UE is 3. When the quantity of independently encoded uplink control information to be transmitted is 4, the UE may perform joint encoding.

For example, it is assumed that a quantity of independently encoded uplink control information of a low-priority HARQ-ACK is X1, a quantity of independently encoded uplink control information of a high-priority HARQ-ACK is X2, a quantity of independently encoded uplink control information of a CSI part 1 is X3, and a quantity of independently encoded uplink control information of a CSI part 2 is X4. In an example, if X1+X2+X3+X4 is greater than the maximum quantity of independently encoded uplink control information indicated by the base station, or if X1+X2+X3+X4 is greater than a processing capability of the UE, the UE may concatenate the CSI part 2 and the CSI part 1, or concatenate the CSI part 2 and the HARQ-ACK, and then perform encoding.

In another example, the UE may concatenate uplink control information exceeding a capability of the UE and other uplink control information, and then perform encoding. Refer to FIG. 6. In FIG. 6, because a low-priority HARQ-ACK exceeds the processing capability of the UE, the UE may concatenate the low-priority HARQ-ACK and the CSI part 1 or concatenate the low-priority HARQ-ACK and the CSI part 2, and then perform encoding. Details are not described again.

In a possible implementation, when a total quantity of code blocks is greater than a second threshold, the first UCI and the second UCI may be concatenated and then encoded.

For example, when a quantity of code blocks of the to-be-transmitted uplink control information exceeds a maximum quantity of code blocks, the UE may perform joint encoding. It is assumed that the maximum quantity of code blocks of the UE is 6. When the quantity of code blocks of the to-be-transmitted uplink control information is 8, the UE may perform joint encoding.

For example, it is assumed that a low-priority HARQ-ACK occupies X1 code blocks, a high-priority HARQ-ACK occupies X2 code blocks, a CSI part 1 occupies X3 code blocks, and a CSI part 2 occupies X4 code blocks. In an example, if X1+X2+X3+X4 is greater than the maximum quantity of code blocks of the uplink control information indicated by the base station, or if X1+X2+X3+X4 is greater than the processing capability of the UE, the UE may jointly encode the CSI part 2 and the CSI part 1, or jointly encode the CSI part 2 and the HARQ-ACK. In another example, the UE may jointly encode UCI exceeding the capability of the UE and other UCI.

Still refer to FIG. 6. In FIG. 6, because a low-priority HARQ-ACK exceeds the processing capability of the UE, the UE may jointly encode the low-priority HARQ-ACK and the CSI part 1, or jointly encode the low-priority HARQ-ACK and the CSI part 2. Details are not described again.

In some embodiments, step S603b may be performed: The UE discards the first uplink control information, and sends the physical uplink channel carrying the second uplink control information.

In a possible implementation, when N is greater than a first threshold, the UE discards the first uplink control information.

For example, when a quantity N of the to-be-transmitted uplink control information exceeds a maximum quantity (that is, the first threshold) of independently encoded uplink control information, the UE may discard the first uplink control information. It is assumed that the maximum quantity of independently encoded uplink control information of the UE is 3. When the quantity of the to-be-transmitted uplink control information is 4, the UE may discard the first uplink control information.

For example, it is assumed that a quantity of independently encoded uplink control information of a low-priority HARQ-ACK is X1, a quantity of independently encoded uplink control information of a high-priority HARQ-ACK is X2, a quantity of independently encoded uplink control information of a CSI part 1 is X3, and a quantity of independently encoded uplink control information of a CSI part 2 is X4. In an example, if a quantity X1+X2+X3+X4 of independently encoded uplink control information to be sent is greater than 3, the UE may discard the CSI part 2; or if a quantity X1+X2+X3+X4 of independently encoded uplink control information is less than or equal to 3, the UE may not perform a discarding operation. In another example, if a quantity X1+X2+X3+X4 of to-be-sent uplink control information is greater than the processing capability of the UE, the UE may directly discard the independently encoded uplink control information of the CSI part 2; or if a quantity of independently encoded uplink control information indicated by the base station does not exceed the processing capability of the UE, the UE may not perform a discarding operation.

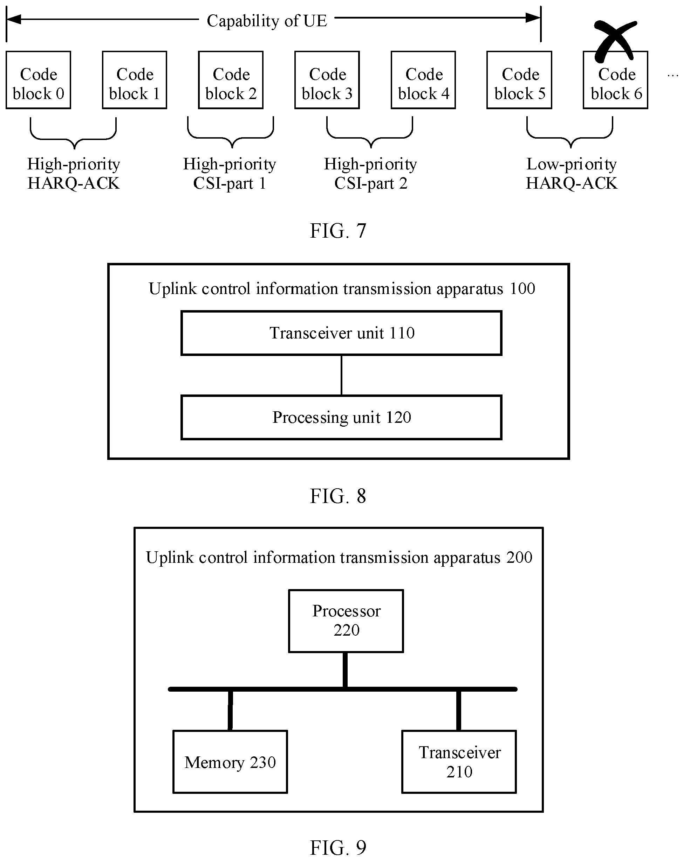

For example, as shown in FIG. 7, the base station may indicate that there is one piece of independently encoded uplink control information of a high-priority HARQ-ACK, one piece of independently encoded uplink control information of a high-priority CSI part 1 code block, one piece of independently encoded uplink control information of a high-priority CSI part 2, and one piece of independently encoded uplink control information of a low-priority HARQ-ACK. In this case, the UE may discard independently encoded uplink control information that exceeds a capability of the UE, for example, discard a low-priority HARQ-ACK. It may also be understood that, in this case, sending of the low-priority HARQ-ACK is canceled.

In a possible implementation, when a total quantity of code blocks is greater than a second threshold, the UE discards the first uplink control information. For example, when a quantity of code blocks of the to-be-transmitted uplink control information exceeds a maximum quantity of code blocks, the UE may discard the first uplink control information. It is assumed that the maximum quantity of code blocks of the UE is 6. When the quantity of code blocks of the to-be-transmitted uplink control information is 8, the UE may discard the first uplink control information.

For example, it is assumed that a low-priority HARQ-ACK occupies X1 code blocks, a high-priority HARQ-ACK occupies X2 code blocks, a CSI part 1 occupies X3 code blocks, and a CSI part 2 occupies X4 code blocks. In an example, if a quantity X1+X2+X3+X4 of code blocks of the independently encoded uplink control information is greater than 6, the UE may discard the code blocks of the CSI part 2; or if a quantity X1+X2+X3+X4 of code blocks of the independently encoded uplink control information is less than or equal to 6, the UE may not perform a discarding operation. In another example, if a quantity X1+X2+X3+X4 of code blocks indicated by the base station is greater than the processing capability of the UE, the UE may directly discard the code blocks of the CSI part 2; or if a quantity of code blocks does not exceed the processing capability of the UE, the UE may not perform a discarding operation.

For example, as shown in FIG. 7, there are two high-priority HARQ-ACK code blocks, one high-priority CSI part 1 code block, two high-priority CSI part 2 code blocks, and two low-priority HARQ-ACK code blocks. In this case, the UE may discard a code block that exceeds a capability of the UE, for example, discard a code block in a low-priority HARQ-ACK. It may also be understood that, in this case, sending of the low-priority HARQ-ACK is canceled.

It should be understood that, because a quantity of code blocks of the uplink control information is related to a quantity of bits of a total UCI bit sequence, a payload of the UCI is split into a maximum of two code blocks.

That is, in this application, the UE may send, on one physical uplink channel, uplink control information including different priorities, and the uplink control information does not exceed the processing capability of the UE.

It should be noted that step S603a and step S603b in this application are two parallel implementations. In an actual operation process, step S603a and step S603b do not need to be simultaneously performed.

Step S604: The base station receives the physical uplink channel carrying the uplink control information.

For details, refer to step S304 in 300. Details are not described again.

According to the method in this embodiment of this application, the uplink control information is sent within a capability range of the terminal device, and working performance of the terminal device is ensured.

The method 700 is an embodiment of an uplink control information transmission method provided in this application. Technical solutions in this embodiment are as follows:

When UCI of a same priority is multiplexed on a PUCCH or a PUSCH for transmission, a time sequence timeline needs to be met, for example, the following first time sequence and second time sequence need to be met.

It should be understood that the time sequence timeline is a gap between DCI and a symbol $S_0$, and the symbol $S_0$ is the first symbol of the earliest channel in an overlapping channel. The time sequence timeline may alternatively be a gap between a physical downlink shared channel (physical downlink shared channel, PDSCH) and a symbol $S_0$.

If the overlapping channel includes a PUSCH, the second time sequence may be:

$$T_{proc,2}^{mux} = \max(T_{proc,2}^{mux,1}, \ldots, T_{proc,2}^{mux,1} \cdots)$$

.

i represents an $i^{th}$ PUSCH. It may be understood that there may be a plurality of PUSCHs in a group of overlapping channels, and i is an index of the PUSCH. A specific formula of $T_{proc,2}^{mux,1}$ is as follows:

$$T_{proc,2}^{mux} = \max((N_2 + d_{2,1} + 1) \bullet (2048 + 144) \bullet \kappa \bullet 2^{-\mu} \bullet T_c + T_{switch}, d_{2,2})$$.

N2 is PUSCH preparation duration, and a unit is an orthogonal frequency division multiplexing (orthogonal frequency division multiplexing, OFDM) symbol. $d_{2,1}$ is a parameter related to a demodulation reference signal (demodulation reference signal, DMRS). If the first symbol of the PUSCH includes only the DMRS, a value of $d_{2,1}$ is 0; otherwise, a value of $d_{2,1}$ is 1. $\kappa$ is a constant and is generally equal to 64. $\mu$ is a subcarrier spacing index. $T_C$ is a time unit. For example, $T_C$ may meet the following form:

$$T_c = 1 / (\Delta f_{max} \bullet N_f)$$,

and

$$\Delta f_{max} = 480 \bullet 10^3 HZ, N_f = 4096$$.

$T_{switch}$ is an uplink switching gap (uplink switching gap). If the DCI triggers BWP switching, $d_{2,2}$ is a bandwidth part (bandwidth part, BWP) switching time (switch time). Otherwise, $d_{2,2}$ is 0. max() is an operation of obtaining the maximum value. In embodiments of this application, unless otherwise specified, the symbol may be an abbreviation of an OFDM symbol.

If the overlapping channel does not include a PUSCH, the second time sequence may be:

$$T_{proc,2}^{mux,i} = (N_2 + 1) \bullet (2048 + 144) \bullet \kappa \bullet 2^{-\mu} \bullet T_c$$.

The first time sequence is:

$$T_{proc,1}^{mux} = \max(T_{proc,1}^{mux,1}, ..., T_{proc,1}^{mux,1}...)$$,

and

$$T_{proc,1}^{mux,i} = (N_1 + d_{1,1} + 1) \bullet (2048 + 144) \bullet \kappa \bullet 2^{-\mu} \bullet T_c$$.

i represents an i$^{th}$ PDSCH, $N_1$ is PDSCH processing duration, and a value of $d_{1,1}$ is related to a PDSCH mapping manner, a PDSCH length, and a processing capability of the UE.

When UCI of different priorities is multiplexed on a PUCCH or a PUSCH for transmission, a time sequence timeline needs to be a third time sequence and a fourth time sequence. The third time sequence is greater than the first time sequence, or the fourth time sequence is greater than the second time sequence.

It should be understood that, that the third time sequence is greater than the first time sequence means that duration of the third time sequence is greater than that of the first time sequence, or duration of the third time sequence is greater than that of the first time sequence.

It should be understood that, that the fourth time sequence is greater than the second time sequence means that duration of the fourth time sequence is greater than that of the second time sequence, or duration of the fourth time sequence is greater than that of the second time sequence.

In a possible implementation, the third time sequence may be greater than the first time sequence, or the fourth time sequence may be greater than the second time sequence when a quantity of a total UCI bit sequence is greater than 3, or a quantity of code blocks of a total UCI bit sequence is greater than 6.

If the overlapping channel includes a PUSCH, the fourth time sequence may be:

$$T_{proc,2}^{mux} = \max(T_{proc,2}^{mux,1}, \ldots, T_{proc,2}^{mux,1} \cdots),$$

and

$$T_{proc,2}^{mux} = \max((N_2 + d_{2,1} + X) \bullet (2048 + 144) \bullet \kappa \bullet 2^{-\mu} \bullet T_c + T_{switch}, d_{2,2}).$$

X is greater than 1, may be 2 or 3, and represents X symbols. X is an integer.

If the overlapping channel does not include a PUSCH, the fourth time sequence may be:

$$T_{proc,2}^{mux,i} = (N_2 + Y) \bullet (2048 + 144) \bullet \kappa \bullet 2^{-\mu} \bullet T_c.$$

Y is greater than 1, may be 2 or 3, and represents Y symbols. Y is an integer.

The third time sequence is:

$$T_{proc,1}^{mux} = \max(T_{proc,1}^{mux,1}, \ldots, T_{proc,1}^{mux,1} \cdots),$$

and

$$T_{proc,1}^{mux,i} = (N_2 + d_{1,1} + Z) \bullet (2048 + 144) \bullet \kappa \bullet 2^{-\mu} \bullet T_c.$$

Z is greater than 1, may be 2 or 3, and represents Z symbols. Z is an integer.

It can be learned from the above that a quantity of symbols is increased when multiplexing is performed with different priorities. Therefore, after the quantity of code blocks continues to increase, the processing time further needs to continue to increase, for example, one, two, or three symbols are added.

That is, in this application, impact of an increase in the quantity of code blocks of the uplink control information on the processing time of the UE is further considered. After the quantity of code blocks of the uplink control information or the quantity of uplink control information increases, the processing time may be increased by increasing a quantity of symbols. In this way, the uplink control information can be sent within a capability range of the terminal device, and working performance of the terminal device is ensured.

In an example, it is assumed that a maximum quantity of code blocks of the uplink control information supported by the UE is 6. When the quantity of code blocks of the uplink control information to be sent by the UE is greater than 6, one, two, or three symbols may be added, to increase the processing time and ensure working performance of the UE.

In an example, it is assumed that a quantity of independently encoded uplink control information supported by the UE is 3. When the quantity of uplink control information to be sent by the UE is greater than 3, one, two, or three symbols may be added, to increase the processing time and ensure the working performance of the UE.

That is, in this application, the terminal device may determine N pieces of uplink control information. N is an integer greater than 3, the N pieces of uplink control information includes first uplink control information and second uplink control information, and a priority of the second uplink control information is higher than that of the first uplink control information. When N is greater than a first threshold, the processing time of the terminal device or a multiplexing processing time is increased, for example, a quantity of symbols is increased, so that the terminal device can complete multiplexing.

It should be noted that embodiments in this application may be separately implemented, or the steps in embodiments may be combined for implementation.

The foregoing describes, in detail with reference to FIG. 2 to FIG. 7, the methods provided in embodiments of this application. The following describes an uplink control information transmission apparatus provided in an embodiment of this application with reference to FIG. 8 and FIG. 9. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between the network elements. It may be understood that, to implement the foregoing functions, each network element includes a corresponding hardware structure and/or a corresponding software module for performing each function. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function module division may be performed on the transmit device or the receive device based on the foregoing method example. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a schematic block diagram of an uplink control information transmission apparatus 100 according to an embodiment of this application. As shown in the figure, the uplink control information transmission apparatus 100 may include a transceiver unit 110 and a processing unit 120.

In a possible design, the uplink control information transmission apparatus 100 may be the terminal device in the foregoing method embodiments, or may be a chip configured to implement a function of the terminal device in the foregoing method embodiments. It should be understood that the uplink control information transmission apparatus 100 may correspond to the terminal device in the method 200, the method 300, the method 400, the method 500, the method 600, and the method 700 in embodiments of this application. The uplink control information transmission apparatus 100 may perform the steps corresponding to the terminal device network element in the method 200, the method 300, the method 400, the method 500, the method 600, and the method 700 in embodiments of this application. It should be understood that a specific process in which each unit performs the foregoing corresponding steps is described in detail in the foregoing method embodiments. For brevity, details are not described herein.

In a possible design, the uplink control information transmission apparatus 100 may be the network device in the foregoing method embodiments, or may be a chip configured to implement a function of the network device in the foregoing method embodiments. It should be understood that the uplink control information transmission apparatus 100 may correspond to the network device in the method 200, the method 300, the method 400, the method 500, the method 600, and the method 700 in embodiments of this application. The uplink control information transmission apparatus 100 may perform the steps corresponding to the network device in the method 200, the method 300, the method 400, the method 500, the method 600, and the method 700 in embodiments of this application. It should be understood that a specific process in which each unit performs the foregoing corresponding steps is described in detail in the foregoing method embodiments. For brevity, details are not described herein.

It should be further understood that when the uplink control information transmission apparatus 100 is a chip, the chip includes a transceiver unit and a processing unit. The transceiver unit may be an input/output circuit or a communication interface. The processing unit may be a processor, a microprocessor, or an integrated circuit that is integrated on the chip. The transceiver unit 110 is configured to implement a signal receiving and sending operation of the uplink control information transmission apparatus 100, and the processing unit 120 is configured to implement a signal processing operation of the uplink control information transmission apparatus 100. Optionally, the uplink control information transmission apparatus 100 further includes a storage unit 130, and the storage unit 130 is configured to store instructions.

FIG. 9 is a schematic block diagram of an uplink control information transmission apparatus 200 according to an embodiment of this application. As shown in the figure, the uplink control information transmission apparatus 200 includes at least one processor 220. The processor 220 is coupled to a memory, and is configured to execute instructions stored in the memory, to send a signal and/or receive a signal. Optionally, the uplink control information transmission apparatus 200 further includes a memory 230, configured to store instructions. Optionally, the uplink control information transmission apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a receiver (or referred to as a receive machine) and a transmitter (or referred to as a transmit machine). The transceiver may further include an antenna. There may be one or more antennas. The transceiver 210 may be a communication interface or an interface circuit.

Specifically, the transceiver 210 in the uplink control information transmission apparatus 200 may correspond to the transceiver unit 110 in the uplink control information transmission apparatus 100, and the processor 220 in the uplink control information transmission apparatus 200 may correspond to the processing unit 120 in the uplink control information transmission apparatus 200.

It should be understood that a specific process in which the transceiver and the processor perform the foregoing corresponding steps is described in detail in the foregoing method embodiments. For brevity, details are not described herein.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch-link DRAM, SLDRAM), and a direct rambus random access memory (direct rambus RAM, DR RAM). It should be noted that the memory in the system and the method described in this specification is intended to include, but not limited to, these memories and any memory of another proper type.

According to the method provided in this embodiment of this application, this application further provides a computer program product. The computer program product includes computer program code. When the computer program code runs on a computer, the computer is enabled to perform the method according to any one of the embodiments shown in the method 200, the method 300, the method 400, the method 500, the method 600, and the method 700.

According to the method provided in this embodiment of this application, this application further provides a computer-readable medium. The computer-readable medium stores program code. When the program code runs on a computer, the computer is enabled to perform the method according to any one of the embodiments shown in the method 200, the method 300, the method 400, the method 500, the method 600, and the method 700.

According to the methods provided in embodiments of this application, this application further provides a system. The system includes the foregoing apparatus or device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

The network side device and the terminal device in the foregoing apparatus embodiments correspond to the network side device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that runs on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An uplink control information transmission method, comprising:

   determining, by a terminal device, N pieces of uplink control information UCI, wherein N is an integer greater than 3, UCI in the N pieces of UCI is a hybrid automatic repeat request acknowledgment HARQ-ACK, channel state information part 1 CSI part 1, or channel state information part 2 CSI part 2, the N pieces of UCI comprise first UCI, second UCI, and third UCI, a priority of the second UCI is higher than that of the third UCI, and the priority of the third UCI is higher than that of the first UCI; and
   discarding, by the terminal device, the first UCI, and sending the second UCI and the third UCI on a physical uplink channel.

2. The method according to claim 1, wherein the physical uplink channel is a physical uplink shared channel PUSCH.

3. The method according to claim 1 or 2, wherein a physical uplink control channel PUCCH and the PUSCH used to carry the N pieces of UCI overlap in time domain.

4. The method according to any one of claims 1 to 3, wherein N=4, and the N pieces of UCI comprise a high-priority HARQ-ACK, a low-priority HARQ-ACK, a low-priority CSI part 1, and a low-priority CSI part 2.

5. The method according to claim 4, wherein the first UCI is a low-priority CSI part 2.

6. The method according to any one of claims 1 to 3, wherein N=4, and the N pieces of UCI comprise a high-priority HARQ-ACK, a low-priority HARQ-ACK, a high-priority CSI part 1, and a high-priority CSI part 2.

7. The method according to any one of claims 1 to 6, wherein the first UCI is lowest-priority uplink control information in the N pieces of UCI.

8. An uplink control information transmission method, comprising:

   receiving, by a network device, a physical uplink channel carrying second uplink control information UCI and third UCI, wherein the physical uplink channel does not carry first UCI; and
   the first UCI, the second UCI, and the third UCI each belong to one of N pieces of UCI, N is an integer greater than 3, UCI in the N pieces of UCI is a hybrid automatic repeat request acknowledgment HARQ-ACK, channel state information part 1 CSI part 1, or channel state information part 2 CSI part 2, a priority of the second UCI is higher than that of the third UCI, and the priority of the third UCI is higher than that of the first UCI.

9. The method according to claim 8, wherein the physical uplink channel is a physical uplink shared channel PUSCH.

10. The method according to claim 8 or 9, wherein a physical uplink control channel PUCCH and the PUSCH used to carry the N pieces of UCI overlap in time domain.

11. The method according to any one of claims 8 to 10, wherein N=4, and the N pieces of UCI comprise a high-priority HARQ-ACK, a low-priority HARQ-ACK, a low-priority CSI part 1, and a low-priority CSI part 2.

12. The method according to claim 11, wherein the first UCI is a low-priority CSI part 2.

13. The method according to any one of claims 8 to 10, wherein N=4, and the N pieces of UCI comprise a high-priority HARQ-ACK, a low-priority HARQ-ACK, a high-priority CSI part 1, and a high-priority CSI part 2.

14. The method according to any one of claims 8 to 13, wherein the first UCI is lowest-priority uplink control information in the N pieces of UCI.

15. An uplink control information transmission apparatus, wherein the apparatus is configured to perform the method according to any one of claims 1 to 7.

16. An uplink control information transmission apparatus, wherein the apparatus is configured to perform the method according to any one of claims 8 to 14.

17. A system, wherein the system comprises at least one apparatus according to claim 15 and at least one apparatus according to claim 16.

18. A computer-readable storage medium, wherein the computer-readable storage medium stores a computer program, and when the computer program is run on a computer, the computer is enabled to perform the method according to any one of claims 1 to 7 or 8 to 14.

19. A computer program product, wherein the computer program product comprises a computer program, and when the computer program is run on a processor, the processor is enabled to perform the method according to any one of claims 1 to 7 or 8 to 14.

Terminal
device 110

Terminal
device 120

Access network
device 130

Core network
device 140

FIG. 1

Method 200

| Step S201: A terminal device determines N pieces of uplink control information, where N is an integer greater than 3, the N pieces of uplink control information include first uplink control information and second uplink control information, and a priority of the second uplink control information is higher than that of the first uplink control information |
| --- |
| Step S202: The terminal device sends, to a network device, a physical channel carrying the N pieces of uplink control information, where the first uplink control information and the second uplink control information are concatenated and then encoded; or the terminal device discards the first uplink control information, and sends a physical uplink channel carrying the second uplink control information |

FIG. 2

Method 300

```
┌──────────┐                                                    ┌──────────┐
│          │                                                    │  Base    │
│    UE    │                                                    │ station  │
│          │                                                    │          │
└────┬─────┘                                                    └────┬─────┘
     │  Step S301: The base station sends indication information to   │
     │   the UE, where the indication information indicates uplink    │
     │◄────control information scheduled by the base station──────────│
     │                                                                │
┌────┴──────────────────────────────────────────┐                    │
│ Step S302: The UE determines N pieces of uplink │                   │
│ control information, where N is an integer greater                  │
│ than 3, the N pieces of uplink control information                  │
│ include first uplink control information and second                 │
│ uplink control information, and a priority of the                  │
│ second uplink control information is higher than                   │
│ that of the first uplink control information     │                  │
└────┬──────────────────────────────────────────┘                    │
     │       Step S303: The UE sends, to the base station, a          │
     │     physical uplink channel carrying the uplink control        │
     │   information, where the first uplink control information       │
     │      and the second uplink control information are             │
     │   concatenated and then encoded; or the UE discards the        │
     │   first uplink control information, and sends, to a network     │
     │   device, a physical uplink channel carrying the second        │
     │──────────uplink control information───────────────────────────►│
     │                                               ┌────────────────┴──────┐
     │                                               │ Step S304: The base station
     │                                               │ receives the physical uplink
     │                                               │ channel carrying the uplink
     │                                               │ control information     │
     │                                               └───────────────────────┘
```

FIG. 3

Method 400

UE

Base
station

Step S401: The UE sends capability
information to the base station

Step S402: The base station
determines indication information that
indicates uplink control information
scheduled by the base station

Step S403: The base station sends the
indication information to the UE

Step S404: The UE determines N pieces of
uplink control information, where N is an
integer greater than 3, the N pieces of uplink
control information include first uplink control
information and second uplink control
information, and a priority of the second uplink
control information is higher than that of the
first uplink control information

Step S405: The UE sends, to the base station, a
physical uplink channel carrying the uplink control
information, where the first uplink control information
and the second uplink control information are
concatenated and then encoded; or the UE discards the
first uplink control information, and sends, to a
network device, a physical uplink channel carrying the
second uplink control information

Step S406: The base station receives
the physical uplink channel carrying
the uplink control information

FIG. 4

Method 500

```
┌────────┐                                                    ┌──────────┐
│   UE   │                                                    │   Base   │
│        │                                                    │ station  │
└────────┘                                                    └──────────┘
```

Step S501: The base station sends indication information to the UE, where the indication information indicates uplink control information scheduled by the base station

Step S502: The UE determines N pieces of uplink control information, where N is an integer greater than 3, the N pieces of uplink control information include first uplink control information and second uplink control information, and a priority of the second uplink control information is higher than that of the first uplink control information

Step S503a: The UE sends, to the base station, a physical uplink channel carrying the uplink control information, where the first uplink control information and the second uplink control information are concatenated and then encoded

Step S503b:
The UE discards the first uplink control information, and sends, to a network device, a physical uplink channel carrying the second uplink control information

Step S504: The base station receives the physical uplink channel carrying the uplink control information

FIG. 5

Capability of UE

| High-priority HARQ-ACK | High-priority CSI-part 1 | High-priority CSI-part 2 | Low-priority HARQ-ACK | ... |

FIG. 6

Capability of UE

| Code block 0 | Code block 1 | Code block 2 | Code block 3 | Code block 4 | Code block 5 | Code block 6 |
|---|---|---|---|---|---|---|

High-priority
HARQ-ACK

High-priority
CSI-part 1

High-priority
CSI-part 2

Low-priority
HARQ-ACK

FIG. 7

Uplink control information transmission apparatus 100

Transceiver unit 110

Processing unit 120

FIG. 8

Uplink control information transmission apparatus 200

Processor
220

Memory 230

Transceiver
210

FIG. 9

## INTERNATIONAL SEARCH REPORT

| International application No. |
|---|
| **PCT/CN2022/082944** |

| A. | CLASSIFICATION OF SUBJECT MATTER |
|---|---|
| | H04W 72/04(2009.01)i; H04L 5/00(2006.01)i |

According to International Patent Classification (IPC) or to both national classification and IPC

| B. | FIELDS SEARCHED |
|---|---|

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNTXT; WOTXT; EPTXT; USTXT; VEN; CNKI; 3GPP: CSI, 丢弃, HARQ, 低优先级, UCI, PUCCH, PUSSH, drop, low priority

| C. | DOCUMENTS CONSIDERED TO BE RELEVANT |
|---|---|

| Category* | Citation of document, with indication, where appropriate, of the relevant passages | Relevant to claim No. |
|---|---|---|
| X | . ""R1-2100439""<br>*3GPP tsg_ran\wg1_rl1*, Vol. , No. , 18 January 2021 (2021-01-18),<br>ISSN: ,<br>    chapter 2 | 1-19 |
| A | CN 112398614 A (DATANG MOBILE COMMUNICATIONS EQUIPMENT CO., LTD.) 23 February 2021 (2021-02-23)<br>    entire document | 1-19 |
| A | CN 112534927 A (QUALCOMM INC.) 19 March 2021 (2021-03-19)<br>    entire document | 1-19 |
| A | CN 110710305 A (QUALCOMM INC.) 17 January 2020 (2020-01-17)<br>    entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 June 2022** | **20 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2022/082944**

| Patent document cited in search report | | | Publication date (day/month/year) | Patent family member(s) | | | Publication date (day/month/year) |
|---|---|---|---|---|---|---|---|
| CN | 112398614 | A | 23 February 2021 | None | | | |
| CN | 112534927 | A | 19 March 2021 | None | | | |
| CN | 110710305 | A | 17 January 2020 | CA | 3059216 | A1 | 13 December 2018 |
| | | | | JP | 2020523837 | A | 06 August 2020 |
| | | | | KR | 20200013757 | A | 07 February 2020 |
| | | | | TW | 201904339 | A | 16 January 2019 |
| | | | | CO | 2019013742 | A2 | 17 January 2020 |
| | | | | AU | 2018279870 | A1 | 31 October 2019 |
| | | | | CL | 2019003548 | A1 | 19 June 2020 |
| | | | | EP | 3636021 | A1 | 15 April 2020 |
| | | | | US | 2021212087 | A1 | 08 July 2021 |
| | | | | WO | 2018227164 | A1 | 13 December 2018 |
| | | | | US | 2019021102 | A1 | 17 January 2019 |
| | | | | BR | 112019025530 | A2 | 23 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110363901